# EUROPEAN PATENT APPLICATION

(11) **EP 2 765 136 A1**
(43) Date of publication of application: **13.08.2014**
(21) Application number: 13154137.7
(22) Date of filing: 06.02.2013
(51) Int. Cl.: C07F 11/00, A61L 2/00

(54) **Heteropolyoxometalates**

(71) Applicant: ITICON GmbH, 60439 Frankfurt am Main (DE); Jacobs University Bremen gGmbH, 28759 Bremen (DE)
(72) Inventor: Schepers, Klaus, 35619 Braunfels (DE); Mischo, Horst, 54295 Trier (DE); Weiss, Pierre-Alain, 65824 Schwalbach (DE); Kortz, Ulrich, 28759 Bremen (DE); Bassil, Bassem S., 28195 Bremen (DE); Barsukova-Stuckart, Maria, 28759 Bremen (DE); Al-Oweini, Rami, 28759 Bremen (DE); Suchopar, Andreas, 28279 Bremen (DE)
(74) Representative: Schiener, Jens

(57) **Abstract**

The present invention relates to novel antimicrobial substances containing heteropolyoxometalates, a surface layer, paint or coating comprising said substances, a process for preparation of said substances and their use for disinfecting purposes and in antimicrobial surfaces, paints or coatings.

## Description

The present invention relates to novel heteropolyoxometalates, a surface layer, paint or coating comprising said heteropolyoxometalates, a process for the preparation of said heteropolyoxometalates and their use for disinfecting purposes and in antimicrobial surfaces, paints or coatings.

In many industrial and domestic processes waste water is produced or fresh water is to be stored for later purposes. As essentially all water sources provide non-sterile water, in fresh water and in particular in waste water there is the risk of microbiological contamination during storage or processing.

Many ways are known in the art to avoid creation of microbiological contaminations, in particular biofilms, in containers for the storage of drinking water, waste water, surface water or similar liquids. Further, several methods are known to avoid microbiological contamination of surfaces, e.g. in hospitals or slaughterhouses. For example, usually the surfaces of containers are cleaned by heat treatment, e.g. by rinsing the surfaces or containers with hot liquids or gases, e.g. hot water or steam. Further, treatment by ozone or chlorine containing gases is known for disinfecting surfaces and containers and cleaning and removal of organic contaminations.

It is also known to apply ultraviolet (UV-) radiation to disinfect surfaces, containers, and even liquids. It is also known to add certain substances to the liquids, such as titanium dioxide, or to apply titanium dioxide to a surface for disinfecting or cleaning purposes. However, these surfaces and substances require UV-radiation for activating the disinfecting efficacy of titanium dioxide.

Further, it is known to apply silver ions or copper ions to solutions in order to reduce the microbiological contamination.

All these measures and procedures are disadvantageous as they waste a lot of energy, require high apparatus cost and costs of operation in order to be sufficiently effective, or rather expensive substances, such as silver ions or copper ions, have to be used, the latter having further disadvantages with regard to water and soil pollution. Further, using substances which are dangerous to handle, e.g. ozone or chlorine containing substances, as well as ultraviolet radiation, is disadvantageous and requires additional safety measures.

The use of polyoxometalates is known in the art for several purposes, e.g. in the general area of analytical chemistry (e.g. elemental analysis, electron staining), the use as catalysts including photo catalysts, in biochemistry for inhibiting electron transfer processes and as electron-dense and rigid components in the crystallization of biomolecules (e.g. ribosomes, leading to the 2009 Nobel Prize), and in medicine due to their antiviral and antitumor activity. The use of polyoxometalates as acid and oxidation catalysts is known in industry (e.g. for the hydration of olefins).

There is still a need in the art to provide an effective, environmentally friendly and cheap measurement to avoid microbial contamination of liquids and surfaces.

It has been surprisingly found that certain heteropolyoxometalates provide excellent antimicrobial efficiency when applied to surfaces, which are in contact with liquids, in particular with waste water, and thereby avoid microbiological contamination of surfaces and of the liquid and lead to a reduction of biofilm formation.

In particular, it has been found that certain heteropolyoxometalates based on phosphorous in combination with molybdenum or tungsten and at least one quaternary ammonium cation showed excellent antimicrobial activity, compared to other heteropolyoxometalates, in particular the known heteropolyoxometalates based on silicon. Surprisingly, the antimicrobial activity seems to be assured by the simple presence of oxygen in the air or dissolved in liquids, thus no activation of the heteropolyoxometalate is necessary, and no addition of activation agents.

Therefore, the present invention relates to heteropolyoxometalates of the formulae (I), (II) or (III):

**Aq₊₃PV_{q}Z_{12-q}O₄₀** (I)

**A₆P₂Z₁₈O₆₂** or (II),

**A₃PZ₄O₂₄** (III)

wherein
Z is selected from Mo or W,
index q = 1, 2 or 3, and
A is selected from one or more cations and comprises at least one quaternary ammonium cation, with the provision that the compounds [(n-C₄H₉)₄N]₃PMo₁₂O₄₀ and [(n-C₆H₉)₄N]₃PMo₁₂O₄₀ are not comprised.

The present invention also relates to a mixture of several differing heteropolyoxometalates of formulae (I), (II) or (III), i.e. at least one parameter Z or q is selected differently for each anion of each quaternary ammonium cation A, or the same heteropolyoxometalate anion of formulae (I), (II) or (III) is present together with at least two differing quaternary ammonium cations.

Generally, polyoxometalates based on molybdenum (Mo) or tungsten (W) are known in the art, in particular as Keggin-type polyanions [XZ₁₂O_{40]}ⁿ⁻, wherein X is selected from P, Si, Ge, As, B or Al. It is also known that the Keggin-type polyoxometalates contain a central heteroatom (X), which can be e.g. phosphorus (P⁵⁺), silicon (Si⁴⁺), germanium (Ge⁴⁺), etc. Further, in the Keggin-type polyoxometalate based on molybdenum or tungsten one or more, in particular 1 to 3, molybdenum or tungsten atoms may be replaced by vanadium atoms (e.g. V⁵⁺). Another example of polyoxoanions is the Wells-Dawson species [X₂Z₁₈O₆₂]ⁿ⁻. This polyanion contains two heteroatoms (X), which can be phosphorus (P⁵⁺) or arsenic (As⁵⁺) and 18 molybdenum or tungsten atoms. Further, in the Wells-Dawson-type polyoxometalate based on tungsten one or more, in particular 1 to 3, tungsten atoms may be replaced by vanadium atoms (e.g. V⁵⁺). Also several types of peroxotungstates are known. One of the most important ones is the Venturello polyoxoanion [PW₄O₂₄]³⁻, whose catalytic properties have been widely studied. The Venturello polyoxoanion consists of the central [PO₄]³⁻ group, which is connected to four {W₂O₂(O₂)₄} units.

Generally, these polyoxometalate anions are known in the art, and the negative charge of the known anions is typically counterbalanced by hydrophilic cations, e.g. Li⁺, Na⁺, K⁺ or NH₄⁺ which provide solubility of the resulting salts in water.

In the heteropolyoxometalates according to the present invention, instead of the hydrophilic cations at least one quaternary ammonium cation is used to counterbalance the negative charge of the above described polyoxometalate anions. The presence of quaternary ammonium cation typically renders the heteropolyoxometalates less soluble or even insoluble in water.

In the heteropolyoxometalates of the present invention the "heteroatom" X is phosphorous, preferred are the heteropolymolybdate derivatives of the fomula (I), wherein residue Z is molybdenum (Mo), and polytungstates of formula (III), wherein residue Z is tungsten (W).

In a preferred embodiment in the heteropolyoxometalate of formula (I) index q is 2 or 3, in particular 2. This means that in the heteropolyoxometalate based on molybdenum or tungsten, from the 12 molybdenum oxide or tungsten oxide subunits two or three are replaced by vanadium oxide subunits. In an especially embodiment, the heteropolyoxometalate is of the formula (IV).

**A₅PV₂Z₁₀O₄₀** (IV),

wherein Z is selected from Mo or W; A is selected from one or more cations and comprises at least one quaternary ammonium cation. Another preferred example is A₅PMo₁₀V₂O₄₀.

In another specifically preferred embodiment in the heteropolyoxometalate of formula (III) residue Z is W, i.e. the heteropolyoxometalate is A₃PW₄O₂₄.

In the heteropolyoxometalates of the present invention, A is selected from one or more cations and comprises at least one quaternary ammonium cation. Quaternary ammonium cations are as known in the art and are ions according to formula (V)

**R¹R²R³R⁴N⁺** (V),

wherein residues R¹, R², R³ and R⁴ can be independently selected, but are preferably identical. Preferably, residues R¹, R², R³ and R⁴ are independently selected from hydrocarbons, more preferably C₁ to C₁₀ hydrocarbons, in particular C₂ to C₈ hydrocarbons, e.g. C₄ to C₆ hydrocarbons, the hydrocarbon being preferably branched or straight alkyl groups. Preferred are propyl, butyl, pentyl, hexyl and heptyl residues, in particular butyl and hexyl residues. Optionally, two of the residues R¹, R², R³ and R⁴ are a part of a ring, e.g. together form a ring, optionally together with the nitrogen atom, i.e. the central nitrogen atom of the quaternary ammonium cation carrying residues R¹, R², R³ and R⁴.

Specifically preferred quaternary ammonium cations are tetrapropylammonium cations, tetrabutylammonium cations, tetrapentylammonium cations, tetrahexylammonium cations, and tetraheptylammonium cations, in particular tetrabutylammonium cations and tetrahexylammonium cations. Further suitable ammonium cations and the preparation thereof are known in the art. Particularly preferred heteropolyoxometalates are e.g. [(CH₃(CH₂)₃)₄N]₅[PV₂Mo₁₀O₄₀], [(CH₃(CH₂)₃)₄N]₃[PW₄O₂₄] and [(CH₃(CH₂)₅)₄N]₃[PW₄O₂₄].

In one preferred embodiment of the present invention, the heteropolyoxometalates are supported, in particular supported on oxides such as magnesium, aluminum, silicon, titanium or cerium oxide, preferably silicon oxide (SiO₂). The oxides, in particular the silicon oxide, preferably has a high surface area, e.g. at least about 150 m²/g. The weight ratio of heteropolyoxometalates of the present invention to the supporting oxide, in particular silicon oxide, is about 10:1 to 1:100, preferably 1:1 to 1:10, e.g. about 1:2.

The present invention further relates to a process for the preparation of the heteropolyoxometalates of the formulae (I), (II) or (III) of the present invention as described above.

The process for the preparation of the heteropolyoxometalates of the formulae (I) and (II) typically comprises the steps of:
a) dissolving a salt comprising [PZ₁₁O₃₉]⁷⁻ anions, when q=1,
   a salt comprising [PZ₁₀O₃₆]⁷⁻ anions, when q=2,
   a salt comprising [PZ₉O₃₄]⁹⁻ anions, when q=3, or
   a salt comprising [PO₄]³⁻ anions, optionally a salt comprising VO₃⁻ anions, and
   a salt comprising ZO₄²⁻ anions
   wherein
   Z is selected from Mo or W,
   in an aqueous solvent, preferably water, to obtain a solution,
b) adding an acid in order to decrease the pH of the solution obtained after step a), and
c) adding a compound containing quaternary ammonium cations.

The process for the preparation of the heteropolyoxometalates of the formula (III) typically comprises the steps of:
a) dissolving a salt or acid comprising [PZ₁₂O₄₀]³⁻_{,} wherein Z is Mo or W in an aqueous solution of hydrogen peroxide, to obtain a solution,
b) adding an acid in order to decrease the pH of the solution of step a),
c) adding a compound containing quaternary ammonium cations.

The heteropolyoxomolybdates or the heteropolyoxotungstates [PZ₉₋₁₁O₃₄₋₄₀]^{y-}, as used in step a) of the process of the present invention for the preparation of the heteropolyoxometalates of the formulae (I) and (II), and [PZ₁₂O₄₀]³⁻, as used in step a) of the process of the present invention for the preparation of the heteropolyoxometalates of the formula (III), can be obtained as known in the art, (e.g. as described in Holleman-Wiberg, Lehrbuch der Anorganischen Chemie, 101st edition, pages 1467-1469; M. T. Pope, Heteropoly and Isopoly Oxometalates, Springer, 1983; or Huheey et al., Anorganische Chemie, Prinzipien von Struktur und Reaktivität, 4. Auflage, 2012, chapter 16.2 etc). In particular, aqueous solutions comprising molybdate and tungstate anions as well as the corresponding heteroatom oxoanions or acids, i.e. phosphoric acid H₃PO₄, or the respective anion PO₄³⁻, respectively, is acidified, and the heteropolyoxomolybdates or heteropolyoxotungstates are obtained by crystallization or chemical precipitation.

In step a) of the process of the present invention for the preparation of the heteropolyoxometalates of the formula (I) VO₃⁻ anions are provided in solution, and a corresponding salt comprising the lacunary (= vacant) heteropolyoxomolybdate or heteropolyoxotungstate anions [PZ₉₋₁₁O₃₄₋₃₉]^{y-}, wherein Z is Mo or W, or are added to obtain a solution in an aqueous solvent, preferably water.

In steps b) of the processes of the present invention for the preparation of the heteropolyoxometalates of the formulae (I), (II) or (III) a suitable acid, preferably a mineral acid, e.g. hydrochloric acid or sulfuric acid is added to decrease the pH of the solution obtained as a result of the steps a).

In steps c) of the processes of the present invention for the preparation of the heteropolyoxometalates of the formulae (I), (II) or (III) at least one compound containing quaternary ammonium cations A as described above or a compound able to provide or release the cations A as described above is added. Preferably, the quaternary ammonium cation containing compound comprises a compound of formula (VI)

**R¹R²R³R⁴NX** (VI),

wherein residues R¹, R², R³ and R⁴ are independently selected from C₁ to C₁₀ hydrocarbons, preferably C₂ to C₈ hydrocarbons, e.g. C₄ to C₆ hydrocarbons and optionally two of the residues R¹, R², R³ and R⁴ are part of a ring or form a ring together with the nitrogen atom, and X is a halogen ion, preferably chloride or bromide. The residues R¹, R², R³ and R⁴ are as defined above, and are preferably identical. Particularly preferred quaternary ammonium cation containing compounds to be used in the processes of the present invention are tetrabutylammonium bromide and tetrahexylammonium bromide. The heteropolyoxometalates of formulae (I), (II) or (III) are obtained as a gel or precipitate, which is typically washed several times with H₂O and may be dried to obtain a powder.

Optionally, the heteropolyoxometalate may be brought into any suitable shape by dissolving the gel or powder in a suitable organic solvent, e.g. ethanol, and drying the resulting solution to obtain a corresponding gel or powder. This way, heteropolyoxometalates may be mixed to prepare the heteropolyoxometalates comprising at least two different quaternary ammonium cations or at least two different heteropolxyoxometalate anions as described above.

The present invention further relates to a surface layer, paint or coating comprising a heteropolyoxometalate as described above. In order to provide a corresponding surface layer, the heteropolyoxometalates may be dissolved in a suitable solvent, preferably an organic solvent, e.g. ethanol and applied to the surface, followed by drying. Suitable excipients and advants as known for surface coatings may be added to the solution to be applied. Similarly, the heteropolyoxometalates may be added to paintings or coatings. Contrary to the known heteropolyoxometalates comprising hydrophilic cations such as Li⁺, Na⁺, K⁺ or NH₄⁺, the anions used in the heteropolyoxometalates of the present invention are hydrophobic and correspondingly the heteropolyoxometalates are less soluble or even insoluble in water (at 20°C). Preferably the solubility of the heteropolyoxometalates of the present invention is below 1 mg/ml in water at 20°C, more preferably below 0.1 mg/ml water, in particular below 0.01 mg/ml water. This lower solubility or even insolubility for aqueous liquids enables their use, in particular in surface layers, paints or coatings which are in direct contact with liquids, typically aqueous liquids, to be stored or treated, in particular for disinfection.

The present invention further relates to the use of the heteropolyoxometalate as described above for disinfecting and deodorizing purposes, in particular in antimicrobial and/or deodorizing surface layers, paints, coatings or oxidizing cleaners. Preferred is the use as biocide, in particular in functional surfaces, such as in antimicrobial surfaces, in coatings and in surface layers, in hospitals and slaughterhouses. Further said heteropolyoxometalates, in particular in paints and coatings, may be used as antimicrobial coatings for ships and boats, for containers for storage of drinking water, waste water, surface water etc.; for storage of drinking water in the beverage industry; for waste decomposition/water purification; and for roof coverings, roof tiles, rain water sewers, tilings, pools, pumps and tubings, technical textiles, paper and wood, in particular to avoid the formation of biofilms.

The heteropolyoxometalates of the present invention may further be used as cross-linking agent, in particular oxidative cross-linking, e.g. of alkyd, vegetable oils, epoxy esters, polybutadiene, etc.; as metal-extraction agent; as metal-recovery agent; as oxygen scavengers; and as polymer modifiers, e.g. to change polymer properties by oxidation. The heteropolyoxometalates may further be used in pulp/fiber bleaching/treatment, in self-cleaning/self-sanitizing surfaces, paints and coatings, and for stripping purposes such as oxidation of impurities, e.g. grease, paint and other residues. The heteropolyoxometalates of the present invention may furthermore be used as supported catalysts on carriers such as fibers, ceramics or polymers.

The following examples are intended to illustrate the invention but should not be construed as limiting.

### Example 1

[(CH₃(CH₂)₃)₄N]₅[PV₂Mo₁₀O₄₀] (RA1)

### Abbreviation: (TBA-PV₂Mo₁₀+SiO₂)

24.4 g NaVO₃ + 100 mL boiling H₂O added to 7.1 g Na₂HPO₄ + 100 mL H₂O, then cooled to RT after that 5 mL conc. H₂SO₄ was added, then 121 g Na₂MoO₄×2H₂O in 200 mL H₂O are added and stirred vigorously, then 85 mL conc. H₂SO₄ are slowly added, to half of the obtained homogeneous solution 19.5 g of TBA-Br was added to obtain orange TBA₅[PMo₁₀V₂O₄₀], which was thoroughly washed with water, the obtained powder was dissolved in minimum amount of acetone and 10 g of SiO₂ was added to the solution. The resulting mixture was stirred vigorously and transferred by layering on the PetriDish, and air-dried for 24 hours.
Weight of the substance: 27 g
Molecular Weight: 158.8 g/mol
Number of moles: 170 mmoles

### Example 2

[(CH₃(CH₂)₃)₄N]₃[PW₄O_{24]} (RA3)

### Abbreviation: (TBA-PW₄+SiO₂)

10 g H₃PW₁₂O₄₀ in 70 mL 30% H₂O₂ was added 10 mL H₃PO₄. The solution was stirred for 4h at 40 °C, to the obtained homogeneous solution 12 g of TBA-SO₄ was added to obtain white TBA₃[PW₄O₂₄], which was thoroughly washed with water, the obtained powder was dissolved in minimum amount of acetone and 10 g of SiO₂ was added to the solution. The resulting mixture was stirred vigorously and transferred by layering on the PetriDish, and air-dried for 24 hours.
Weight of the substance: 27 g
Molecular Weight: 158.4 g/mol
Number of moles: 170 mmoles

### Example 3

[(CH₃(CH₂)₅)₄N]₃[PW₄O₂₄] (RA4)

### Abbreviation: (THA-PW₄+SiO₂)

10 g H₃PW₁₂O₄₀ in 70 mL 30% H₂O₂ was added 10 mL H₃PO₄. The solution was stirred for 4h at 40 °C, to the obtained homogeneous solution 12 g of THA-Cl was added to obtain white THA₃[PW₄O₂₄], which was thoroughly washed with water, the obtained powder was dissolved in minimum amount of acetone and 10 g of SiO₂ was added to the solution. The resulting mixture was stirred vigorously and transferred by layering on the PetriDish, and air-dried for 24 hours.
Weight of the substance: 27 g
Molecular Weight: 158.7 g/mol
Number of moles: 170 mmoles

### Comparative Example 1

*[(CH₃(CH₂)₅)₄N]₇SiV₃W₉O₄₀: SiO₂* (MS3)

### Abbreviation: (THA-SiV₃W₉+SiO₂)

NaVO₃ (0.7 g, 6.0 mmol) and 5.0 g of Na₁₀[α-SiW₉O₃₄]*xH₂O (2.0 mmol) were mixed as dry powders and added to 50 ml of H₂O at room temperature. The solution was stirred vigorously during 30 min and then 6 M HCl was added dropwise to bring the pH to 1.5, and a clear wine red solution developed. The resulting solution was filtered and 15.0 g of tetrahexylammonium bromide (THABr) was added. The orange gel was separated by removing the upper aqueous layer and thoroughly washed with H₂O.

### (THA-SiV₃W₉+SiO₂)

The obtained powder of THA-SiV₃W₉ was dissolved in minimum amount of ethanol and 10 g of SiO₂ (washed and calcined, p. a., granulation 0.1-0.5 mm min. 70 %, CAS no. 14808-60-7, Sigma-aldrich) was added to the solution. The resulting mixture was stirred vigorously and transferred to the Petri dish, air-dried for 24 hours and then dried in the oven for 12 hours at 55°C.
Weight of the substance: 29.8 g
Molecular Weight: 175,3 g/mol
Number of moles: 174 mmoles

### Example 4

The heteropolyoxometalates of Examples 1 to 3 and of Comparative Example 1 were tested for their disinfection affectivity. Laundry waste water obtained from a domestic washing machine was tested for its total aerobic bacterial count before storage and after storage for 100 minutes and 5 days in a Petri dish covered with the respective heteropolyoxometalate. The results are summarized in the following table:

| **total aerobic bacterial count** | **t=.0** | **t = 100 min** | **t = 5 days** |
|---|---|---|---|
| blank value | 1.3E+06 | 9.9E+05 | 6.5E+07 |
| Example 1 | 1.3E+06 | 8.5E+05 | 300 |
| Example 2 | 1.3E+06 | 1.5E+05 | 100 |
| Example 3 | 1.3E+06 | 1.1E+05 | <100 |
| Comparative Example 1 | 6.6E+05 | 1.4E+06 | 1.6E+06 |

These results show that the heteropolyoxometalates of the Examples 1, 2 and 3 of the present invention show an excellent disinfecting efficiency, while the heteropolyoxometalates of Comparative Example 1, which is based on silicon, did not show antimicrobial activity.

## Claims

1. A heteropolyoxometalate of the Formulae (I), (II) or (III)
**A_{q+3}PV_{q}Z_{12-q}O₄₀** (I),
**A₆P₂Z₁₈O₆₂** (II),
or
**A₃PZ₄O₂₄** (III)
wherein
Z is selected from Mo or W,
index q = 1, 2 or 3, and
A is selected from one or more cations and comprises at least one quaternary ammonium cation,
with the provision that the compounds [(n-C₄H₉)₄N]₃PMo₁₂O₄₀ and [(n-C₆H₉)₄N]₃PMo₁₂O₄₀ are not comprised.

2. The heteropolyoxometalate of Formula (I) of claim 1, wherein Z is Mo and q=2.

3. The heteropolyoxometalate of Formula (III) of claim 1, wherein Z is W.

4. The heteropolyoxometalate of any one of claims 1 to 3, wherein A comprises a least two differing quaternary ammonium cations.

5. The heteropolyoxometalate of any one of claims 1 to 4, wherein A comprises a quaternary ammonium cation of formula (IV)
**R¹R²R³R⁴N⁺** (IV),
wherein residues R¹, R², R³ and R⁴ are independently selected from C₁ to C₁₀ hydrocarbons, preferably C₂ to C₈ hydrocarbons, and optionally two of the residues R¹, R², R³ and R⁴ are part of a ring or form a ring together with the nitrogen atom.

6. The heteropolyoxometalate of claim 5, wherein A comprises a quaternary ammonium cation of formula (IV) wherein residues R¹, R², R³ and R⁴ are identical.

7. The heteropolyoxometalate of any one of the preceding claims, wherein A comprises a tetrabutylammonium cation and/or a tetrahexylammonium cation.

8. The mixture of at least two heteropolyoxometalates of any one of the preceding claims.

9. A surface layer, paint or coating comprising a heteropolyoxometalate according to any one of the preceding claims.

10. Process for the preparation of heteropolyoxometalates of Formulae (I) and (II) according to any one of claims 1 to 9 comprising the steps of
a) dissolving
a salt comprising [PZ₁₁O₃₉]⁷⁻ anions, when q=1,
a salt comprising [PZ₁₀O₃₆]⁷⁻ anions, when q=2, or
a salt comprising [PZ₉O₃₄]⁹⁻ anions, when q=3,
a salt comprising [PO₄]³⁻ anions, optionally a salt comprising VO₃⁻ anions, and a salt comprising ZO₄²⁻ anions wherein
Z is selected from Mo or W,
in an aqueous solvent, preferably water, to obtain a solution,
b) adding an acid in order to decrease the pH of the solution obtained after the step a), and
c) adding a compound containing quaternary ammonium cations.

11. Process for the preparation of heteropolyoxometalates of Formula (III) according to any one of claims 1 to 9 comprising the steps of
a) dissolving a salt or acid comprising [PZ₁₂O₄₀]³⁻ anions, wherein Z is Mo or W, in an aqueous solution of hydrogen peroxide, to obtain a solution,
b) adding an acid in order to decrease the pH of the solution of step a),
c) adding a compound containing quaternary ammonium cations.

12. Processes according to claims 10 or 11, wherein the quaternary ammonium containing compound comprises a compound of formula (V)
**R¹R²R³R⁴NX** (V),
wherein residues R¹, R², R³ and R⁴ are independently selected from C₁ to C₁₀ hydrocarbons, preferably C₂ to C₈ hydrocarbons, and optionally two of the residues R¹, R², R³ and R⁴ are part of a ring or form a ring together with the with the nitrogen atom, and X is an halogen ion, preferably chloride or bromide.

13. The processes according to claim 12, wherein the quaternary ammonium containing compound comprises a compound of formula (V) wherein residues R¹, R², R³ and R⁴ are identical.

14. The process according to any one of claims 10 to 13, wherein the quaternary ammonium containing compound comprises tetrabutylammonium bromide and/or tetrabutylammonium sulfate and/or tetrahexylammonium bromide.

15. Use of a heteropolyoxometalate according to any one of claims 1 to 9 for disinfecting or in antimicrobial surface layers, paints or coatings.
